# EUROPÄISCHE PATENTSCHRIFT

(11) **EP 1 516 816 B1**
(45) Veröffentlichungstag und Bekanntmachung des Hinweises auf die Patenterteilung: **25.07.2007**
(21) Anmeldenummer: 04405576.2
(22) Anmeldetag: 14.09.2004
(51) Int. Cl.: B65B 7/28, B65B 51/22, B29C 65/08

(54) **Verfahren und Vorrichtung zur Versiegelung von Nahrungsmittelbehältern**
Method and apparatus for sealing food containers.
Procédé et dispositif pour le scellage de récipients à denrées alimentaires.

(30) Priorität: 22.09.2003 CH 16162003
(43) Veröffentlichungstag der Anmeldung: 23.03.2005
(73) Patentinhaber: Ideacorp AG, 6331 Hünenberg (CH)
(72) Erfinder: Tüns, Heinz-Josef, 8447 Dachsen (CH)
(74) Vertreter: Bremi, Tobias Hans

(56) Entgegenhaltungen:
- EP-A- 0 074 343
- EP-A- 0 344 137
- EP-A- 1 110 701
- DE-A- 3 447 771
- GB-A- 2 322 825
- US-A- 5 096 052
- US-A- 5 345 747

## Beschreibung

### TECHNISCHES GEBIET

Die vorliegende Erfindung betrifft ein Verfahren zur Erzeugung einer Siegelverbindung zwischen wenigstens zwei Aluminiumfolienbereichen, von denen wenigstens einer mit einer wärmeaktivierbaren Beschichtung versehen ist, wobei der zu versiegelnde Bereich zwischen einem Siegelkopf und einem Siegelamboss unter zusätzlicher Einwirkung von Wärme verpresst wird. Weiterhin betrifft die vorliegende Erfindung eine Vorrichtung zur Durchführung eines derartigen Verfahrens.

### STAND DER TECHNIK

Die insbesondere langfristige Aufbewahrung von Nahrungsmitteln in Metallbehältern wie beispielsweise Dosen oder Aluminiumbehältern hat sich seit langer Zeit bewährt. Im Bereich der Nahrungsmitteldosen dominieren dabei insbesondere einerseits die vollständig verschweissten Dosen, welche mit einem Dosenöffner geöffnet werden müssen, d. h. bei welchen ein spezielles Werkzeug zur Öffnung vorhanden sein muss. Dies erweist sich häufig als Nachteil. Derartige Behälter haben sich insbesondere für die sehr langfristige und stabile Aufbewahrung von gut konservierbaren Nahrungsmitteln bewährt.

Andererseits sind insbesondere aus dem Bereich der Fischdosen Behälter bekannt, deren Deckel mit einer entsprechenden Lasche geöffnet werden können, wobei typischerweise aus einem planen Deckel ein über eine Ritzung oder über einen in einem Umformprozess hergestellten Versatz ein definierter Bereich des Deckels herausgerissen wird. Problematisch an derartigen Nahrungsmittelbehältern ist einerseits die Tatsache, dass eine grosse Aufreisskraft erforderlich ist, um den Deckel mit der Lasche an der Sollbruchstelle abzureissen. Wird dabei nicht genau die richtige Technik verwendet, so sind entweder unzumutbare Kräfte zum Öffnen erforderlich, oder es müssen zu schwache Sollbruchstellen hergestellt werden und die Verschlusssicherheit des Behälters ist für viele Anwendungen nicht genügend gewährleistet. Ausserdem entstehen beim Herauslösen genau wie beim Öffnen einer Dose mit einem Dosenöffner äusserst scharfe Kanten, was zu Verletzungen führen kann. Auch die abgetrennten Deckel verfügen über äusserst scharfkantige zum Teil messerscharfe Randzonen, welche eine Verletzungsgefahr darstellen, und deshalb, wie aus dem Bereich der Getränkedosen bekannt, auch zur ökologischen Problemen Anlass geben.

Im Bereich der Aluminiumbehälter, unter anderem beispielsweise bei Tiernahrung sehr beliebt, wird typischerweise der Verschluss über eine Versiegelung eines Deckels aus Aluminium oder gegebenenfalls einem anderen Werkstoff auf dem Behälter gewährleistet. Der Behälter verfügt dazu typischerweise über einen seitlich vorstehenden umlaufenden Rand, auf welchen der Deckel in Überlappung aufgelegt wird. Der Deckel verfügt wenigstens auf der dem Behälter zugewandten Seite über eine Lackschicht. Bei dieser Lackschicht handelt es sich um eine Schicht aus wärmeaktivierbarem Kunststoff. Normalerweise wird zum Verschliessen eines derartigen Behälters der Deckel auf den Behälter aufgelegt, und anschliessend der Randbereich zwischen einen Siegelkopf und einen entsprechenden Amboss gebracht, wobei sowohl Siegelkopf als auch Amboss auf einer Temperatur gehalten werden, welche genügt, um den wärmeaktivierbaren Lack derart zum Fliessen zu bringen, dass in Kombination mit angelegtem Druck eine Siegelung zwischen dem Behälter und dem Deckel entsteht.

Problematisch im Zusammenhang mit dem Verschliessen derartiger Behälter ist die Tatsache, dass insbesondere wenn derartige Behälter mit Nahrungsmitteln gefüllt sind, bereits kleinste Verunreinigungen des Bereichs, welcher versiegelt werden soll, zu einer ungenügenden Verbindung zwischen Behälter und Deckel Anlass gibt. Dies fuhrt bereits bei der Produktion der verschlossenen Behälter zu Problemen, da im Nahrungsmittelbereich derartige Behälter nach deren Verschluss normalerweise in einem Gegendruckautoklaven bei beispielsweise mehr als 100° C während zirka einer Stunde sterilisiert werden. Ist die Siegelung bei diesem Vorgang nicht genügend stabil, tritt der Inhalt des Behälters nach aussen. Dadurch ist anschliessend die Sterilität nicht mehr gewährleistet, und so die Langzeitstabilität der im Behälter aufbewahrten Nahrungsmittel gefährdet.

### DARSTELLUNG DER ERFINDUNG

Der Erfindung liegt demnach die Aufgabe zugrunde, ein Verfahren zur Verfügung zu stellen, mit welchem eine stabile Siegelverbindung unter Verwendung wenigstens einer Metallfolie, bevorzugt wenigstens einer Aluminiumfolie, zur Verfügung hergestellt werden kann. Insbesondere bevorzugt geht es darum, eine Siegelung zwischen wenigstens zwei Aluminiumfolienbereichen zu erzeugen. Ausserdem liegt der Erfindung die Aufgabe zugrunde, eine Vorrichtung zur Verfügung zu stellen, welche die Durchführung des genannten Verfahrens erlaubt. Dabei ist wenigstens einer der Aluminiumfolienbereiche mit einer wärmeaktivierbaren Beschichtung versehen. Der zu versiegelnde Bereich wird beim Siegelvorgang zwischen einem Siegelkopf und einem Siegelamboss unter zusätzlicher Einwirkung von Wärme verpresst.

Die Lösung dieser Aufgabe wird dadurch erreicht, dass wenigstens ein erster Teil der Wärme über konvektive Wärmeübertragung und/oder Wärmeleitung in den zu versiegelnden Bereich eingetragen wird, und ein zweiter Teil der Wärme über Ultraschall am Siegelkopf und/oder am Siegelamboss in den zu versiegelnden Bereich eingetragen wird.

Der Kern der Erfindung besteht somit darin, die ungenügende Wirkung von über konvektive Wärmeübertragung und/oder Wärmeleitung in den Siegelbereich eingetragene Wärme durch zusätzliche Einwirkung von Ultraschall zu unterstützen. Die alleinige Anwendung von Ultraschall führt bei der Verwendung von Metall wie insbesondere Aluminium zu ungenügenden Resultaten, da die im Siegelbereich durch den Ultraschall erzeugte Wärme durch die hohe Leitfähigkeit von Aluminium zu schnell aus dem Siegelbereich abgeführt wird und entsprechend bei ausschliesslicher Verwendung von Ultraschall eine ungenügende Siegelung entsteht. Auf der anderen Seite kann die Siegelung unter alleiniger Verwendung von konvektiver Wärmeübertragung und/oder Wärmeleitung ebenfalls keine genügende Robustheit gegen Verunreinigungen gewährleisten. Überraschenderweise zeigt es sich nun, dass sich die vorteilhaften Wirkungen einer Siegelung unter Verwendung von Ultraschall, welche u.a. darin bestehen, dass Verunreinigungen organischer Natur, welche im Siegelbereich vorhanden sind, durch Ultraschall zerstört werden und anschliessend beim Siegelvorgang keine hinderliche Wirkung entfalten können, genutzt werden können, und dass auf der anderen Seite die zu rasche Abführung von Wärme verhindert oder dieser gegengesteuert werden kann, indem zusätzlich Wärme über Konvektion oder Wärmeleitung von aussen zugeführt wird. Es entsteht so eine Verbindung, welche einerseits eine äusserst geringe Anfälligkeit in Bezug auf im Siegelbereich angeordnete organische Verunreinigungen aufweist, welche eine hohe Dichtigkeit erlaubt, und welche dennoch unter Anwendung von für Endverbraucher vertretbaren Kräften leicht geöffnet werden kann. Besonders vorteilhaft lässt sich das vorgeschlagene Verfahren wie bereits erwähnt im Bereich von Nahrungsmittelbehältern anwenden. Es handelt sich dabei beispielsweise bei wenigstens einem der Aluminiumfolienbereiche um einen napfförmigen, insbesondere bevorzugt mit Nahrungsmitteln gefüllten Behälter mit einem öffnungsseitigen Siegelrand respektive einer öffnungsseitigen Siegelkante. Ein zweiter der Aluminiumfolienbereiche ist entsprechend ein Deckel, welcher bevorzugt auf seiner dem Siegelbereich zugewandten Seite mit einer wärmeaktivierbaren Lackschicht versehen ist (selbstverständlich kann auch der Behälter mit einer derartigen Schicht versehen sein, oder sowohl Deckel als auch Behälter). Deckel und Behälter können dabei einstückig ausgebildet sein, oder aber bevorzugt als separate Teile. Bevorzugt ist dabei der Siegelrand umlaufend um die Öffnung des Behälters ausgebildet, und es wird beim Siegelvorgang eine vollständige luftdichte Versiegelung des Behälters erzeugt.

Eine erste bevorzugte Ausführungsform des erfindungsgemässen Verfahrens ist dadurch gekennzeichnet, dass der erste Teil der Wärme über einen auf erhöhter Temperatur gehaltenen Siegelamboss, und der zweite Teil über einen als Sonotrode ausgebildeten Siegelkopf in den zu versiegelnden Bereich eingetragen wird. Selbstverständlich ist es auch möglich, die beiden Funktionen umgekehrt einzusetzen, d. h. den Siegelamboss als Sonotrode auszubilden und den Siegelkopf zu beheizen. Diese Aufteilung der Funktion auf die beiden den Siegelbereich erfassenden Elemente erweist sich als effizient und technisch einfach realisierbar.

Beim Siegelamboss handelt es sich insbesondere im Bereich von Nahrungsmittelbehältern um einen Siegelring mit einer umlaufenden Anpressfläche, wobei diese Anpressfläche im Wesentlichen der Geometrie des Siegelbereichs respektive einer öffnungsseitigen Siegelkante des Behälters angepasst ist. Der Siegelamboss wird bevorzugt über Induktion, Durchleitung einer Heizflüssigkeit (beispielsweise durch entsprechende im Amboss vorgesehene Kanäle) und/oder elektrische Mittel (Widerstand, Wirbelstrom, etc., beispielsweise durch entsprechende im Amboss vorgesehene Heizspiralen) in geregelter Weise auf einer erhöhten Temperatur gehalten. Die erforderliche Temperatur bestimmt sich dabei durch den verwendeten Lack auf der Aluminiumschicht. Im Zusammenhang mit den gängigen Beschichtungen beispielsweise aus Polypropylen erweist es sich als vorteilhaft, eine Temperatur von mehr als 100° C einzustellen, bevorzugt von im Bereich von 120° C - 180° C.

Eine weitere bevorzugte Ausführungsform des erfindungsgemässen Verfahrens ist dadurch gekennzeichnet, dass die Sonotrode nach Erreichen eines minimalen Anpressdruckes, bevorzugt im Bereich von 500 bis 1000 Newton, Ultraschall im Bereich von 1kHz bis 30 kHz, bevorzugt im Bereich von 15 kHz bis 25 kHz mit einer Amplitude im Bereich von 40 bis 80 µm in den zu versiegelnden Bereich einträgt. Wiederum verfügt die Sonotrode insbesondere bei Verwendung im Nahrungsmittelbereich über eine umlaufende Anpressfläche.

Um einer Überhitzung der Sonotrode vorzubeugen, kann es sich bewähren, diese zu kühlen. Diese Kühlung kann beispielsweise durch ein Beaufschlagen mit Kühlluft realisiert werden, beispielsweise durch ein einseitiges oder beidseitiges Anblasen mit gekühlter Luft.

Um den Kopf der Sonotrode zu schützen und die Prozesssicherheit zu gewährleisten, und um ausserdem den Wärmehaushalt im Siegelbereich zu optimieren, erweist es sich als vorteilhaft, zwischen der Anpressfläche der Sonotrode und der Aluminiumfolie (beispielsweise dem Deckel) im zu versiegelnden Bereich ein Zwischenband, insbesondere aus PTFE, vorzusehen. Ein derartiges Band respektive eine derartige Fläche hat vorzugsweise eine Dicke im Bereich von 0.5 bis 0.8 Millimetern, und wird derart angeordnet, dass dieses Zwischenband erst bei Annäherung von Amboss und Siegelkopf mit der Anpressfläche vom Amboss in Kontakt kommt, und zwischen den Verfahrensschritten von der Anpressfläche leicht beabstandet ist.

Mit einem derartigen Verfahren können im Bereich von 100 bis 200, insbesondere bevorzugt im Bereich von 125 bis 160 Siegelvorgänge durchgeführt werden, wobei eine Siegelzeit im Bereich von 200-600 ms, insbesondere bevorzugt von 300 - 400 ms Anwendung findet.

Eine andere bevorzugte Ausführungsform ist dadurch gekennzeichnet, dass ein napfförmiger, insbesondere bevorzugt mit Nahrungsmitteln gefüllter Behälter aus Aluminium mit einem öffnungsseitigen, in bevorzugt im Wesentlichen horizontaler Richtung nach aussen vorstehenden Siegelrand einer Breite im Bereich von 1-4 mm (normalerweise zwischen 2 und 3 mm) von unten im Bereich des Siegelrandes vom Siegelamboss erfasst und nach oben zum Siegelkopf geführt und an diesen angepresst wird, und dabei ein auf der Öffnung des Behälters in Überlappung mit dem Siegelrand angeordneter Deckel aus Aluminium mit dem Behälter versiegelt wird, wobei beim Siegelvorgang eine vollständige luftdichte Versiegelung des Behälters erzeugt wird. Eine Nachbehandlung in einem Gegendruckautoklaven kann bei einer derartigen Siegelung ohne Risiko vorgenommen werden.

Weiterhin betrifft die vorliegende Erfindung eine Vorrichtung zur Erzeugung einer Siegelverbindung zwischen wenigstens zwei Aluminiumfolienbereichen, von denen wenigstens einer mit einer wärmeaktivierbaren Beschichtung versehen ist, wobei der zu versiegelnde Bereich zwischen einem Siegelkopf und einem Siegelamboss unter zusätzlicher Einwirkung von Wärme verpresst wird. Die Vorrichtung zeichnet sich dabei dadurch aus, dass Mittel angeordnet sind, mit welchen der Siegelamboss in geregelter Weise auf erhöhter Temperatur gehalten werden kann, und dass der Siegelkopf als Sonotrode ausgebildet ist.

Eine derartige Vorrichtung kann zur Durchführung eines Verfahrens, wie es oben beschrieben wurde, vorteilhaft eingesetzt werden.

Bevorzugt wird dabei eine derartige Vorrichtung für das Verschliessen von Behältern für Nahrungsmittel verwendet. Beispielsweise handelt es sich dann bei einem ersten der Aluminiumfolienbereiche um einen napfförmigen, insbesondere bevorzugt mit Nahrungsmitteln gefüllten Behälter mit einem öffnungsseitigen Siegelrand, und bei wenigstens einen zweiten der Aluminiumfolienbereiche um einen Deckel, welcher bevorzugt auf seiner dem Siegelbereich zugewandten Seite mit einer wärmeaktivierbaren Lackschicht versehen ist. Insbesondere bevorzugt ist der Siegelrand umlaufend um die Öffnung des Behälters ausgebildet, und beim Siegelvorgang wird dadurch eine vollständige luftdichte Versiegelung des Behälters erzeugt.

Vorzugsweise handelt es sich beim Siegelamboss um einen Siegelring mit einer umlaufenden Anpressfläche, welcher bevorzugt über Induktion, Durchleitung einer Heizflüssigkeit und/oder elektrische Mittel in geregelter Weise auf einer erhöhten Temperatur gehalten werden kann, wobei insbesondere bevorzugt Teile des Siegelamboss' von wenigstens einem beabstandeten Blech umschlossen sind.

Um die Wirksamkeit der Sonotrode auch bei hohen Taktraten gewährleisten zu können, erweist es sich als vorteilhaft, Mittel vorzusehen, mit welchen der der Anpressfläche der Sonotrode zugewandte Bereich der Sonotrode gekühlt werden kann, wobei diese Mittel bevorzugt bei einer umlaufenden Sonotrode als insbesondere aussenseitig und/oder innenseitig geführter Luftkühlring mit Ausblaslöchern für die Kühlluft ausgestaltet sind. Ebenso ist es möglich, zwischen der Anpressfläche der Sonotrode und der Aluminiumfolie im zu versiegelnden Bereich ein Zwischenband, insbesondere aus PTFE, anzuordnen, wobei dieses Zwischenband bevorzugt auswechselbar ausgestaltet ist, und wobei es bevorzugt derart befestigt wird, dass es nur im Moment der Siegelung mit der Anpressfläche des Siegelkopfes in Kontakt ist, während es zwischen den Verfahrensschritten um beispielsweise einen Millimeter von diesem beabstandet ist.

Dies ist beispielsweise realisierbar, indem dieses Band oder diese Fläche in von der Anpressfläche beabstandeter Position festgespannt wird, und anschliessend beim Heranführen des Behälters respektive des darauf liegenden Deckels durch diesen an die Anpressfläche herangeführt wird, dies unter leichter Deformation des Bandes, und somit ein Abfliessen der Wärme in die Sonotrode stark gemindert wird.

Weitere bevorzugte Ausführungsformen der Erfindung sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: eine schematische Darstellung eines zentralen Schnittes durch eine Vorrichtung zur Versiegelung eines Behälters, wobei in der linken Hälfte jene Situation dargestellt ist, in welcher die Versiegelung stattfindet, und in der rechten Hälfte die Situation unmittelbar vor dem Ergreifen des Behälters durch den Siegelring;
- Fig. 2: eine Aufsicht auf einen Behälter, wie er in einer Vorrichtung gemäss Fig. 1 versiegelt werden kann.

### WEGE ZUR AUSFÜHRUNG DER ERFINDUNG

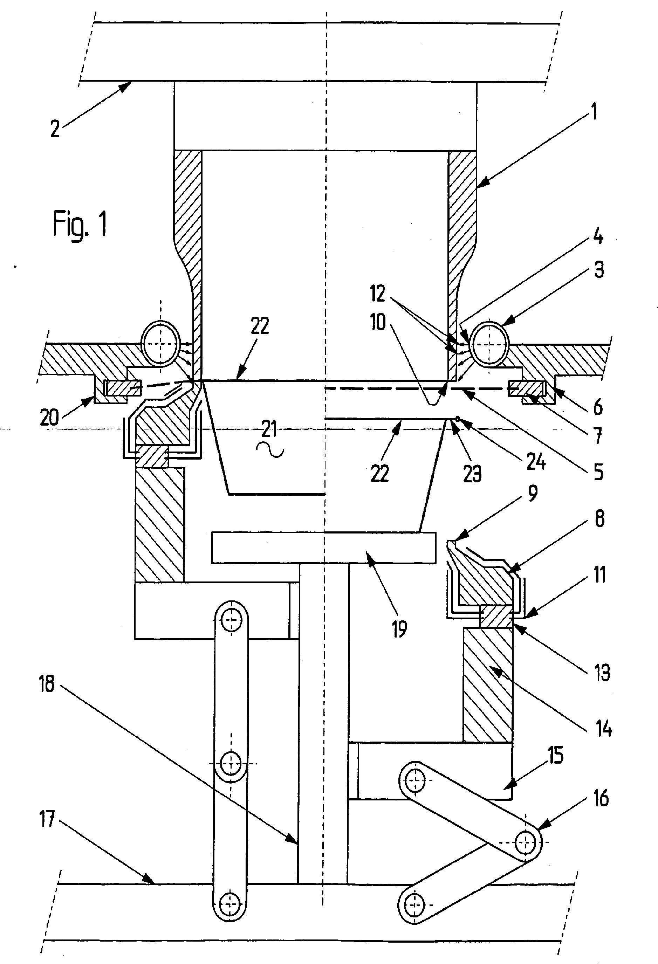

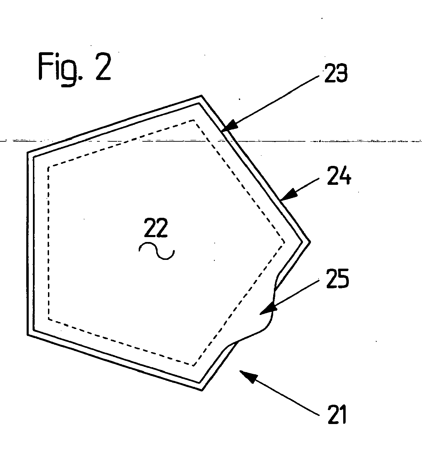

Fig. 1 stellt in einem zentralen Schnitt eine Vorrichtung dar, mit welcher eine Versiegelung gemäss der Erfindung durchgeführt werden kann. Versiegelt werden kann dabei ein Gefäss gemäss Fig. 2, welcher aus einem Behälter 21 besteht, welcher auf der Seite der Öffnung über eine nach aussen vorstehenden Kante, den Siegelbereich 23, verfügt, welcher in seinem peripheren Bereich zusätzlich über eine Bördelkante 24 verfügen kann. Der Siegelbereich verfügt über eine Breite von 2-3 mm. Ein derartiger Überlappungsbereich ist typischerweise genügend um eine sichere Siegelung zu gewährleisten. Auf dem Behälter 21 befindet sich ein Deckel 22, welcher über eine Lasche 25 verfügt. Diese Lasche kann zum Öffnen des Behälters ergriffen werden und der Deckel 22 leicht vom Behälter 21 abgetrennt werden, ohne dass dabei ein Zerreissen des Deckels oder eine Beschädigung des Behälters 21 befürchtet werden muss. Typischerweise handelt es sich beim Behälter 21 um einen Behälter aus Aluminium einer Dicke von ca. 110 µm, welcher auf seiner Innenseite mit einer Schicht einer Dicke von ca. 50 µm Polypropylen beschichtet ist. Eine stärkere Konstruktion ist möglich, wenn Aluminium einer Dicke von 130 µm verwendet wird. Zur Erhöhung der Stabilität verfügt der Behälter normalerweise über wenigstens teilweise gewellte Struktur. Der Deckel seinerseits besteht ebenfalls aus Aluminium, in diesem Fall aber etwas dünner, z. B. einer Dicke von ca. 70 µm bei einer einseitigen (dem Behälter zugewandten) Schicht aus Polypropylen von ca. 30 µm. Das Polypropylen ist thermoplastisch und stellt die wärmeaktivierbare Lackschicht zur Verfügung, welche die Versiegelung zwischen Deckel 22 und Behälter 21 ermöglicht.

Der Behälter kann eine kreisrunde Form besitzen oder aber eine polygonale Form, so beispielsweise die Form eines Dreiecks, Vierecks oder Quadrats, oder, wie in Fig. 2 dargestellt, beispielsweise die Form eines Pentagons.

Der untere Teil der Vorrichtung gemäss Fig. 1 steht auf einer Grundplatte 17. Auf dieser Grundplatte ist einerseits ein Ausstosser 18 befestigt, an dessen oberem Ende eine horizontale Platte 19 befestigt ist. Auf diese Platte werden die zugeführten und mit Nahrungsmitteln befüllten Behälter 21 mit bereits aufgelegtem Deckel 22 bereitgestellt. Sie werden beispielsweise über entsprechende Greifvorrichtungen oder Förderbänder automatisch auf diese befördert.

Ebenfalls auf der Grundplatte 17 ist über wenigstens zwei Kniehebel 16 eine Sockelplatte 15 befestigt, welche über ein zentrales Loch verfügt, durch welches der Ausstosser 18 hindurchragt. Auf dieser Sockelplatte 15 ist zunächst ein Sockelring 14 befestigt und auf diesem über Dämpfungsringe 13 der eigentliche Siegelring 8. Die Dämpfungsringe 13 dienen der Abfederung von Vibrationen sowie dem Ausgleich von Unregelmässigkeiten.

Der Siegelring 8 ist z.B. im Wesentlichen kreisförmig (zumindest vorteilhafterweise für kreisrunde Siegelbereiche 23, die Geometrie insbesondere der Auflagefläche 9 richtet sich nach dem Siegelbereich) ausgebildet, und besitzt einen nach schräg oben auf die Achse gerichteten Fortsatz, an dessen oberem Ende die Anpressfläche 9 angeordnet ist. Der Siegelring ist beheizt, und seine Temperatur kann geregelt werden. Seine Temperatur kann induktiv, über Widerstand oder Wirbelstrom oder auch über im Siegelring geführte Wärmeflüssigkeiten bewirkt werden. Typischerweise ist der Siegelring 8 in seinem unteren massiven Bereich beheizt und die Anpressfläche 9 wird über Wärmeleitung auf der gewünschten Temperatur gehalten.

Auf der oberen Seite verfügt die Vorrichtung über eine an einer Deckplatte 2 befestigte Sonotrode 1, wie sie auf dem Markt als bestehende Ultraschalleinheit erhältlich ist. Die Sonotrode ist das Schweisshorn beim Ultraschallschweissen von insbesondere thermoplastischen Kunststoffteilen. Da die Sonotrode dauerhaft Ultraschallschwingungen ausgesetzt ist, sind die Anforderungen an das Material sehr hoch. Auf eine Sonotrode werden von einem Generator Ultraschallschwingungen übertragen. Die Ultraschallschwingungen erzeugen eine Reibungswärme an den Fügeflächen der Teile und das im Siegelbereich vorgesehene Thermoplast wird zum viskosen Fliessen gebracht. Nach dem Auskühlen ist die Schweissverbindung fest. Die Sonotrode ist gewissermassen zylinderförmig (wie beim Amboss bestimmt sich die Form nach dem Siegelbereich 23) und das untere Ende respektive die untere Kante bildet die Anpressfläche 10 für den Siegelvorgang. Die Sonotrode arbeitet in einem Frequenzbereich zwischen 1 kHz und 30 Kilohertz, normalerweise wird bei 20 kHz gearbeitet. Es ist auch möglich, in einer Abfolge unterschiedliche Frequenzen nacheinander anzulegen, dies kann in einem Sweep-Verfahren (kontinuierliches Durchfahren der Frequenzen) oder durch Abschnitte unterschiedlicher diskreter Frequenzen geschehen. So zeigt es sich ganz allgemein im Zusammenhang mit der Verwendung der Sonotrode, dass zwischen 3-8 verschiedene Frequenzwerte, bevorzugt ca. 5 verschiedene Werte, z.B. in einem Bereich von 10 - 20 kHz, vorteilhaft nacheinander angelegt werden können. Der Ultraschall verfügt über eine Amplitude von 40 - 80 µm. Da eine Sonotrode 1 nicht überhitzt werden darf, ist zudem um die Sonotrode 1 herum ein Luftkühlring 3 angeordnet. Dieser Luftkühlring 3 verfügt auf seiner der Sonotrode 1 zugewandten Seite über Ausblaslöcher 4, durch welche Kühlluft aus dem Ring 3 heraustritt und die Sonotrode 1 beaufschlagt.

Unmittelbar unterhalb der Anpressfläche 10 ist zudem ein Zwischenband 5 aus PTFE befestigt, typischerweise mit einer Dicke im Bereich von 0.5 bis 0.8 mm. Das Zwischenband 5 ist in einem Einschubring 7 gefasst, und dieser Einschubring 7 kann in einer Haltenut eines Halters 20 befestigt werden. Diese Konstruktion erlaubt ein einfaches Auswechseln des Zwischenbandes 5. Der Abstand zwischen Zwischenband 5 und Anpressfläche 10 in der Situation, wie sie auf der rechten Seite in Fig. 1 dargestellt ist, beträgt normalerweise nicht mehr als 0.5 mm.

Das Verfahren zum Versiegeln eines Behälters 21 kann aus Fig. 1 ersehen werden. Auf der rechten Seite ist die Situation vor dem Versiegeln dargestellt, auf der linken Seite ist jener Moment dargestellt, in welchem der Deckel 22 auf den Behälter 21 gesiegelt wird.

Wie in der rechten Hälfte von Fig. 1 ersichtlich, wird der Behälter 21 zunächst auf einer Platte 19, welcher auf einem Ausstosser 18 befestigt ist, bereitgestellt. Der Behälter 21 wird über entsprechende Fördermittel auf diese Platte 19 geführt. Die Platte kann auch Bestandteil der Fördermittel sein. Die Platte 19 ist dabei derart von der Sonotrode 1 beabstandet, dass zwischen dem Behälter 21 und der Anpressfläche 10 der Sonotrode ein Abstand verbleibt. Der bereitgestellte Behälter, auf welchem bereits ein Deckel 22 aufliegt (der Deckel kann aber auch erst kurz vor dem Anpressen eingeschoben werden), und in welchem typischerweise bereits Nahrungsmittel oder Ähnliches vorliegen, wird nun von unten vom Siegelring 8, oder genauer von der Anpressfläche 9 erfasst. Der Behälter 21 verfügt über einen im Wesentlichen horizontal nach aussen vorstehenden Rand, den Siegelrand 23, unter welchen die Anpressfläche 9 zu liegen kommt. Die Einheit bestehend aus Sockelplatte 15, Sockelring 14, Dämpfungsring 13 und Siegelring 8 (welcher zum besseren Wärmehaushalt mit einem Kühlblech 11 umfasst ist) wird nun über den Kniehebel 16 nach oben verschoben und untergreift den Siegelrand 23. Durch den Bördelrand 24 und die Seitenwand des Behälters 21 findet in einem gewissen Bereich eine automatische Ausrichtung des Behälters 21 auf der Anpressfläche 9 statt, sollte die Anpressfläche 9 nicht ganz genau unterhalb vom Siegelrand 23 auftreffen. Der Behälter 21 wird nun gegen die Sonotrode 1 geführt, wobei zunächst Kontakt mit dem Zwischenband 5 hergestellt wird. Der Kniehebel 16 schiebt nun den Siegelring 8 aber noch weiter gegen die Sonotrode 21, wobei, wie dies nun im linken Teil von Fig. 1 ersichtlich ist, das Zwischenband 5, welches normalerweise leicht beabstandet von der Anpressfläche 10 der Sonotrode 1 angeordnet ist, zusammen mit der Oberseite vom Behälter gegen die Sonotrode geführt wird. Dabei verformt sich das Zwischenband 5 leicht nach oben.

Der Kniehebel 16 presst nun den Behälter 21 mit aufgelegten Deckel 22 gegen die Sonotrode 1, welche ab einem gewissen Anpressdruck, konkret von ca. 800N, mit Ultraschall beaufschlagt wird. Die Kühlung 4 der Sonotrode 1 wird bevorzugt nicht nur während der Zeit, in welcher die Sonotrode 1 Ultraschall anlegt, betrieben, um sicherzustellen, dass keine Überhitzung der Sonotrode 1 auftritt. Der Druck erhöht sich nun für den Siegelvorgang auf ca. 2-5 bar, wobei einerseits der beheizte Siegelring 8 Wärme in den Siegelbereich über die Anpressfläche 9 einträgt, und andererseits von der Sonotrode zur Verfügung gestellter Ultraschall im Siegelbereich Wärme erzeugt.

Unter der gemeinsamen Einwirkung von Druck und erhöhter Temperatur schmilzt dabei die Lackschicht einerseits auf der Unterseite des Deckels und andererseits auf der Oberseite des Siegelrandes 23. Die beiden Aluminiumschichten werden so fest miteinander verklebt. Typischerweise reicht eine Siegelzeit von ca. 350 ms, um eine sichere und stabile Verbindung zwischen Deckel 22 und Behälter respektive Siegelrand 23 herzustellen. Es können Produktionsgeschwindigkeiten im Bereich von 140 Behälter 21 pro Minute erreicht werden.

Insbesondere dann, wenn Behälter 21 mit Nahrungsmitteln wie beispielsweise Fisch gefüllt sind, erweist sich das vorgeschlagene Verfahren als vorteilhaft. Während die alleinige Anwendung von Druck und Ultraschall wegen der hohen Wärmeleitfähigkeit von Aluminium keine genügende Wärmeentwicklung in der Siegelzone ermöglicht (die vom Ultraschall erzeugte Wärme wird zu schnell abtransportiert) und so keine genügende Versiegelung von Behälter 21 und Deckel 22 ermöglicht ist, und während andererseits die alleinige Anwendung von Druck und erhöhter Temperatur auf Amboss 8 und/oder Siegelkopf sehr anfällig ist in Bezug auf auf dem Siegelrand vorhandene Nahrungsmittel oder sonstige organische Bestandteile, kann die vorgeschlagene Kombination eine verbesserte Versiegelung gewährleisten. Nahrungsmittelteile wie beispielsweise Gräte von Fischen, welche aus Versehen auf den Siegelbereich 23 respektive zwischen Siegelbereich und Deckel 21 zu liegen kommen, werden durch den Ultraschall zertrümmert und können den Siegelvorgang nicht mehr stören. Die von unten über den Amboss 8 zugeführte Wärme auf der anderen Seite verhindert, dass im Siegelbereich nicht genügend Wärme für einen effizienten Siegelvorgang zur Verfügung steht. Eine derartige verschlossene Nahrungsmittelpackung ist einerseits gut verschlossen, erlaubt aber dennoch eine benutzerfreundliche vernünftige Öffnungskraft, wenn an der Abzuglasche 25 gezogen wird.

## Patentansprüche

1. Verfahren zur Erzeugung einer Siegelverbindung zwischen wenigstens zwei Aluminiumfolienbereichen (21 - 24), von denen wenigstens einer (22) mit einer wärmeaktivierbaren Beschichtung versehen ist, wobei der zu versiegelnde Bereich (23) zwischen einem Siegelkopf (1,10) und einem Siegelamboss (8,9) unter zusätzlicher Einwirkung von Wärme verpresst wird,
**dadurch gekennzeichnet, dass**
wenigstens ein erster Teil der Wärme über konvektive Wärmeübertragung und/oder Wärmeleitung in den zu versiegelnden Bereich (23) eingetragen wird, und ein zweiter Teil der Wärme über Ultraschall am Siegelkopf (1,10) und/oder am Siegelamboss (8,9) in den zu versiegelnden Bereich eingetragen wird.

2. Verfahren nach Anspruch 1, **dadurch gekennzeichnet, dass** wenigstens einer der Aluminiumfolienbereiche (21,23,24) ein napfförmiger, insbesondere bevorzugt mit Nahrungsmitteln gefüllter Behälter (21) mit einem öffnungsseitigen Siegelrand (23) ist, und wenigstens ein zweiter der Aluminiumfolienbereiche ein Deckel (22) ist, welcher bevorzugt auf seiner dem Siegelbereich (23) zugewandten Seite mit einer wärmeaktivierbaren Lackschicht versehen ist, wobei insbesondere bevorzugt der Siegelrand (23) umlaufend um die Öffnung des Behälters (21) ausgebildet ist, und beim Siegelvorgang eine vollständige luftdichte Versiegelung des Behälters erzeugt wird.

3. Verfahren nach einem der vorhergehenden Ansprüche, **dadurch gekennzeichnet, dass** der erste Teil der Wärme über einen auf erhöhter Temperatur gehaltenen Siegelamboss (8,9), und der zweite Teil über einen als Sonotrode (1) ausgebildeten Siegelkopf in den zu versiegelnden Bereich (23) eingetragen wird.

4. Verfahren nach Anspruch 3, **dadurch gekennzeichnet, dass** es sich beim Siegelamboss (8) um einen Siegelring mit einer umlaufenden Anpressfläche (9) handelt, welcher bevorzugt über Induktion, Durchleitung einer Heizflüssigkeit und/oder elektrische Mittel in geregelter Weise auf einer erhöhten Temperatur von insbesondere mehr als 100° C, bevorzugt von im Bereich von 120° C -180°C gehalten wird.

5. Verfahren nach einem der Ansprüche 3 oder 4, **dadurch gekennzeichnet, dass** die Sonotrode (1) nach Erreichen eines minimalen Anpressdruckes, bevorzugt im Bereich von 500 bis 1000 Newton, Ultraschall im Bereich von 1kHz bis 30 kHz, bevorzugt im Bereich von 15 kHz bis 25 kHz mit einer Amplitude im Bereich von 40 bis 80 µm in den zu versiegelnden Bereich (23), welcher bevorzugt als umlaufende Anpressfläche (10) ausgestalten ist, einträgt, wobei vorzugsweise eine Ultraschallfrequenz oder eine Folge von diskreten unterschiedlichen Ultraschallfrequenzen nacheinander angelegt werden.

6. Verfahren nach einem der Ansprüche 3-5, **dadurch gekennzeichnet, dass** die Sonotrode (1) gekühlt wird, wobei diese Kühlung bevorzugt durch ein Beaufschlagen mit Kühlluft (12) erfolgt.

7. Verfahren nach einem der Ansprüche 3-6, **dadurch gekennzeichnet, dass** zwischen Anpressfläche (10) von Sonotrode (1) und Aluminiumfolie (22) im zu versiegelnden Bereich (23) ein Zwischenband (5), insbesondere aus PTFE, angeordnet ist.

8. Verfahren nach einem der vorhergehenden Ansprüche, **dadurch gekennzeichnet, dass** im Bereich von 100 bis 200, insbesondere bevorzugt im Bereich von 125 bis 160 Siegelvorgänge durchgeführt werden, wobei eine Siegelzeit von im Bereich von 200-600 ms, insbesondere bevorzugt von 300 - 400 ms Anwendung findet.

9. Verfahren nach einem der vorhergehenden Ansprüche, **dadurch gekennzeichnet, dass** ein napfförmiger, insbesondere bevorzugt mit Nahrungsmitteln gefüllter Behälter (21) aus Aluminium mit einem öffnungsseitigen, in horizontaler Richtung nach aussen vorstehender Siegelrand (23) einer Breite im Bereich von 3-4 mm von unten im Bereich des Siegelrandes (23) vom Siegelamboss (8) erfasst und nach oben zum Siegelkopf (1,10) geführt und an diesen angepresst wird, und dabei ein auf der Öffnung des Behälters in Überlappung mit dem Siegelrand (23) angeordneter Deckel (22) aus Aluminium mit dem Behälter (21) versiegelt wird, wobei beim Siegelvorgang eine vollständige luftdichte Versiegelung des Behälters erzeugt wird.

10. Vorrichtung zur Erzeugung einer Siegelverbindung zwischen wenigstens zwei Aluminiumfolienbereichen (21 - 24), von denen wenigstens einer (22) mit einer wärmeaktivierbaren Beschichtung versehen ist, wobei der zu versiegelnde Bereich (23) zwischen einem Siegelkopf (1,10) und einem Siegelamboss (8,9) unter zusätzlicher Einwirkung von Wärme verpresst wird,
**dadurch gekennzeichnet, dass**
Mittel angeordnet sind, mit welchen der Siegelamboss (8,9) in geregelter Weise auf erhöhter Temperatur gehalten werden kann, und dass der Siegelkopf (1,10) als Sonotrode (1) ausgebildet ist.

11. Vorrichtung nach Anspruch 10 zur Durchführung eines Verfahrens nach einem der Ansprüche 1-9, wobei es sich bevorzugt bei einem ersten der Aluminiumfolienbereiche (21,23, 24) um einen napfförmigen, insbesondere bevorzugt mit Nahrungsmitteln gefüllten Behälter (21) mit einem öffnungsseitigen Siegelrand (23) handelt, und bei wenigstens einen zweiten der Aluminiumfolienbereiche um ein Deckel (22), welcher bevorzugt auf seiner dem Siegelbereich (23) zugewandten Seite mit einer wärmeaktivierbaren Lackschicht versehen ist, wobei insbesondere bevorzugt der Siegelrand (23) umlaufend um die Öffnung des Behälters (21) ausgebildet ist, und beim Siegelvorgang eine vollständige luftdichte Versiegelung des Behälters erzeugt wird.

12. Vorrichtung nach einem der Ansprüche 10 oder 11, **dadurch gekennzeichnet, dass** es sich beim Siegelamboss (8) um einen Siegelring mit einer umlaufenden Anpressfläche (9) handelt, welcher bevorzugt über Induktion, Durchleitung einer Heizflüssigkeit und/oder elektrische Mittel in geregelter Weise auf einer erhöhten Temperatur gehalten werden kann, wobei insbesondere bevorzugt Teile des Siegelamboss (8) von wenigstens einem beabstandeten Blech (11) umschlossen sind.

13. Vorrichtung nach einem der Ansprüche 10-12, **dadurch gekennzeichnet, dass** Mittel (3) vorhanden sind, mit welchen der der Anpressfläche (10) der Sonotrode (1) zugewandte Bereich der Sonotrode (1) gekühlt werden kann, wobei diese Mittel bevorzugt bei einer umlaufenden Sonotrode (1) als insbesondere aussenseitig und/oder innenseitig geführter Luftkühlring (3) mit Ausblaslöchern (4) für die Kühlluft (12) ausgestaltet sind.

14. Vorrichtung nach einem der Ansprüche 10-13, **dadurch gekennzeichnet, dass** zwischen der Anpressfläche (10) der Sonotrode (1) und Aluminiumfolie (22) im zu versiegelnden Bereich (23) ein Zwischenband (5), insbesondere aus PTFE, angeordnet ist, wobei dieses Zwischenband (5) bevorzugt auswechselbar ausgestaltet ist.

## Claims

1. Method for producing a sealed connection between at least two aluminium foil regions (21 - 24), at least one (22) of which is provided with a heat-activatable coating, the region (23) that is to be sealed being pressed between a sealing head (1, 10) and a sealing anvil (8, 9) under the additional effect of heat, **characterized in that** at least a first part of the heat is introduced into the region (23) to be sealed by means of convective heat transfer and/or heat conduction, and a second part of the heat is introduced into the region to be sealed by means of ultrasound at the sealing head (1, 10) and/or at the sealing anvil (8, 9).

2. Method according to Claim 1, **characterized in that** at least one of the aluminium foil regions (21, 23, 24) is a cup-shaped container (21), with particular preference filled with foods, having a sealing edge (23) on the opening side, and at least a second one of the aluminium foil regions is a lid (22), which with preference is provided on its side facing the sealing region (23) with a heat-activatable coating, the sealing edge (23) being formed with particular preference such that it runs peripherally around the opening of the container (21), and a complete airtight seal of the container being produced in the sealing operation.

3. Method according to one of the preceding claims, **characterized in that** the first part of the heat is introduced into the region (23) to be sealed by means of a sealing anvil (8, 9) kept at elevated temperature, and the second part is introduced into the said region by means of a sealing head formed as a sonotrode (1).

4. Method according to Claim 3, **characterized in that** the sealing anvil (8) is a sealing ring with a peripheral pressing area (9), which is kept in a regulated way at an elevated temperature of in particular over 100°C, with preference in the range of 120°C-180°C, with preference by means of induction, sending through a heating fluid and/or electrical means.

5. Method according to either of Claims 3 and 4, **characterized in that**, after reaching a minimum pressing pressure, with preference in the range from 500 to 1000 Newtons, the sonotrode (1) introduces into the region (23) to be sealed, which is designed with preference as a peripheral pressing area (10), ultrasound in the range from 1 kHz to 30 kHz, with preference in the range from 15 kHz to 25 kHz, with an amplitude in.the range from 40 to 80 µm, preferably one ultrasonic frequency being applied or a series of discrete different ultrasonic frequencies being applied one after the other.

6. Method according to one of Claims 3-5, **characterized in that** the sonotrode (1) is cooled, this cooling being performed with preference by subjecting it to cooling air (12).

7. Method according to one of Claims 3-6, **characterized in that** an intermediate strip (5), in particular of PTFE, is arranged between the pressing area (10) of the sonotrode (1) and the aluminium foil (22) in the region (23) to be sealed.

8. Method according to one of the preceding claims, **characterized in that** in the range of 100 to 200, with particular preference in the range of 125 to 160, sealing operations are carried out, a sealing time in the range of 200-600 ms, with particular preference of 300-400 ms, being used.

9. Method according to one of the preceding claims, **characterized in that** a cup-shaped container (21) of aluminium, with particular preference filled with foods, having a sealing edge (23) on the opening side, protruding outwards in a horizontal direction and of a width in the range of 3-4 mm is engaged from below in the region of the sealing edge (23) by the sealing anvil (8) and taken upwards to the sealing head (1, 10) and pressed against the latter, and a lid (22) of aluminium that is arranged on the opening of the container such that it overlaps the sealing edge (23) is sealed with the container (21), a complete airtight seal of the container being produced in the sealing operation.

10. Apparatus for producing a sealed connection between at least two aluminium foil regions (21 - 24), at least one (22) of which is provided with a heat-activatable coating, the region (23) that is to be sealed being pressed between a sealing head (1, 10) and a sealing anvil (8, 9) under the additional effect of heat, **characterized in that** means with which the sealing anvil (8, 9) can be kept in a regulated way at an elevated temperature are arranged, and **in that** the sealing head (1, 10) is formed as a sonotrode (1).

11. Apparatus according to Claim 10 for carrying out a method according to one of Claims 1-9, it being preferred for a first one of the aluminium foil regions (21, 23, 24) to be a cup-shaped container (21), with particular preference filled with foods, having a sealing edge (23) on the opening side, and at least a second one of the aluminium foil regions to be a lid (22), which with preference is provided on its side facing the sealing region (23) with a heat-activatable coating, the sealing edge (23) being formed with particular preference such that it runs peripherally around the opening of the container (21), and a complete airtight seal of the container being produced in the sealing operation.

12. Apparatus according to either of Claims 10 and 11, **characterized in that** the sealing anvil (8) is a sealing ring with a peripheral pressing area (9), which can be kept in a regulated way at an elevated temperature, with preference by means of induction, sending through a heating fluid and/or electrical means, it being particularly preferred for parts of the sealing anvil (8) to be enclosed by at least one metal sheet (11) kept at a distance from it.

13. Apparatus according to one of Claims 10-12, **characterized in that** means (3) by which the region of the sonotrode (1) that is facing the pressing area (10) of the sonotrode (1) can be cooled are present, these means being designed with preference in the case of a peripheral sonotrode (1) as an air cooling ring (3) with blow-out holes (4) for the cooling air (12), in particular disposed on the outside and/or inside.

14. Apparatus according to one of Claims 10-13, **characterized in that** an intermediate strip (5), in particular of PTFE, is arranged between the pressing area (10) of the sonotrode (1) and the aluminium foil (22) in the region (23) to be sealed, this intermediate strip (5) being designed with preference to be exchangeable.

## Revendications

1. Procédé de formation d'une liaison scellée entre au moins deux parties (21 - 24) de feuille d'aluminium dont au moins une (22) est dotée d'un revêtement activé par la chaleur, dans lequel la partie (23) à sceller est comprimée entre une tête de scellement (1, 10) et une enclume de scellement (8, 9) avec en plus action de la chaleur,
**caractérisé en ce qu'**au moins une partie de la chaleur est apportée dans la partie (23) à sceller par transfert de chaleur par convection et/ou transfert de chaleur par conduction, une deuxième partie de la chaleur étant apportée dans la partie à sceller par ultrasons sur la tête de scellement (1, 10) et/ou l'enclume de scellement (8, 9).

2. Procédé selon la revendication 1, **caractérisé en ce qu'**au moins l'une des parties (21, 23, 24) de feuille d'aluminium forme un récipient (21) en forme de godet, en particulier rempli de préférence de produits alimentaires, et doté d'un bord de scellement (23) du côté de son ouverture, et **en ce qu'**au moins une deuxième partie de feuille d'aluminium est un couvercle (22) qui est doté de préférence sur son côté tourné vers la zone de scellement (23) d'une couche de vernis activée par la chaleur, le bord de scellement (23) étant formé de manière particulièrement préférable autour de l'ouverture du récipient (21), un scellement complètement étanche à l'air du récipient étant formé par l'opération de scellement.

3. Procédé selon l'une des revendications précédentes, **caractérisé en ce que** la première partie de la chaleur est apportée dans la partie (23) à sceller par une enclume de scellement (8, 9) maintenue à haute température, la deuxième partie étant apportée par une tête de scellement configurée comme "sonotrode" (1).

4. Procédé selon la revendication 3, **caractérisé en ce que** l'enclume de scellement (8) est un anneau de scellement doté d'une surface périphérique de poussée (9) maintenue de manière régulée à une haute température, en particulier à une température supérieure à 100° C et de préférence comprise dans la plage de 120° C à 180° C par induction, circulation d'un liquide de chauffage et/ou moyens électriques.

5. Procédé selon l'une des revendications 3 ou 4, **caractérisé en ce qu'**après avoir atteint une pression minimale de poussée, de préférence comprise entre 500 et 1 000 Newtons, la sonotrode (1) introduit des ultrasons compris dans la plage de 1 kHz à 30 kHz et de préférence dans la plage de 15 kHz à 25 kHz à une amplitude comprise dans la plage de 40 à 80 µm dans la partie à sceller (23) de préférence configurée comme surface périphérique de poussée (10), les ultrasons appliqués ayant une fréquence ou une succession de fréquences différentes distinctes.

6. Procédé selon l'une des revendications 3 à 5, **caractérisé en ce que** la sonotrode (1) est refroidie et **en ce que** ce refroidissement est réalisé de préférence par application d'air de refroidissement (12).

7. Procédé selon l'une des revendications 3 à 6, **caractérisé en ce qu'**une bande intermédiaire (5), en particulier en PTFE, est disposée dans la zone à sceller (23) entre la surface de poussée (10) de la sonotrode (1) et la feuille d'aluminium (22).

8. Procédé selon l'une des revendications précédentes, **caractérisé en ce que** de 100 à 200 et de façon particulièrement préférable de 125 à 160 opérations de scellement sont réalisées, la durée de scellement utilisée étant comprise entre 200 et 600 ms et de façon particulièrement préférable entre 300 et 400 ms.

9. Procédé selon l'une des revendications précédentes, **caractérisé en ce qu'**un récipient (21) en aluminium, en forme de godet et de façon particulièrement préférable rempli de produits alimentaires, doté du côté de son ouverture d'un bord de scellement (23) qui déborde vers l'extérieur dans la direction horizontale et d'une largeur de 3 à 4 mm est saisi par le bas dans la zone du bord de scellement (23) par l'enclume de scellement (8), est guidé vers le haut en direction de la tête de scellement (1, 10) et est repoussé contre cette dernière, un couvercle (22) en aluminium disposé sur l'ouverture du récipient de manière à être superposé au bord de scellement (23) étant scellé sur le récipient (21) et un scellement complètement étanche à l'air du récipient étant formé par l'opération de scellement.

10. Dispositif pour réaliser une liaison scellée entre au moins deux zones (21 - 24) de feuille d'aluminium parmi lesquelles au moins une (22) est dotée d'un revêtement activé par la chaleur, la partie (23) à sceller étant comprimée entre une tête de scellement (1, 10) et une enclume de scellement (8, 9) avec en plus action de la chaleur, **caractérisé en ce qu'**il présente des moyens qui permettent de maintenir l'enclume de scellement (8, 9) de manière régulée à une haute température et **en ce que** la tête de scellement (1, 10) est configurée comme sonotrode (1).

11. Dispositif selon la revendication 10 en vue de la mise en oeuvre d'un procédé selon l'une des revendications 1 à 9, une première des parties (21, 23, 24) de feuille d'aluminium étant un récipient (21) en forme de godet, de manière particulièrement préférable rempli de produits alimentaires et doté du côté de son ouverture d'un bord de scellement (23) et dans lequel au moins une deuxième des parties de feuille d'aluminium est un couvercle (22) qui est doté de préférence sur son côté tourné vers la zone de scellement (23) d'une couche de vernis activé par la chaleur, le bord de scellement (23) étant formé de façon particulièrement préférable autour de l'ouverture du récipient (21), un scellement complètement étanche à l'air du récipient étant formé lors de l'opération de scellement.

12. Dispositif selon l'une des revendications 10 ou 11, **caractérisé en ce que** l'enclume de scellement (8) est un anneau de scellement doté d'une surface périphérique de poussée (9) et qui peut être maintenu de manière régulée à une haute température, de préférence par induction, circulation d'un liquide de chauffage et/ou moyens électriques, des parties de l'enclume de scellement (8) étant de façon particulièrement préférable entourées par au moins une tôle (11) maintenue à distance d'elles.

13. Dispositif selon l'une des revendications 10 à 12, **caractérisé en ce qu'**il présente des moyens (3) qui permettent de refroidir la partie de la sonotrode (1) tournée vers la surface de poussée (10) de la sonotrode (1), ces moyens étant, lorsque la sonotrode (1) est périphérique, configurés de préférence comme anneau (3) de refroidissement par air situé en particulier du côté extérieur et/ou du côté intérieur et doté de trous (4) de soufflage de l'air de refroidissement (12).

14. Dispositif selon l'une des revendications 10 à 13, **caractérisé en ce qu'**entre la surface de poussée (10) de la sonotrode (1) et la feuille d'aluminium (22), une bande intermédiaire (5), en particulier en PTFE, est disposée dans la zone à sceller (23), cette bande intermédiaire (5) étant de préférence remplaçable.
